Europäisches Patentamt

European Patent Office

Office européen des brevets

(19)

(11) Numéro de publication : **0 174 237**
**B1**

(12) **FASCICULE DE BREVET EUROPÉEN**

(45) Date de publication du fascicule du brevet :
02.11.89

(51) Int. Cl.⁴ : **H 04 L 7/02**

(21) Numéro de dépôt : 85401586.4

(22) Date de dépôt : 02.08.85

(54) **Dispositif d'acquisition rapide du rythme et de la phase d'un signal numérique.**

(30) Priorité : 10.08.84 FR 8412675

(43) Date de publication de la demande :
12.03.86 Bulletin 86/11

(45) Mention de la délivrance du brevet :
02.11.89 Bulletin 89/44

(84) Etats contractants désignés :
DE GB NL

(56) Documents cités :
EP—A— 0 054 322
DE—A— 2 654 927
US—A— 4 229 824
US—A— 4 335 361
PATENTS ABSTRACTS OF JAPAN, vol. 6, no. 119 (E-116) [997], 3 juillet 1982; & JP - A - 57 48 841 (FUJITSU K.K.) 20.03.1982

(73) Titulaire : **Milon, Jean**
**Kerlessanouet**
**F-22700 Perros-Guirec (FR)**

**Papin, Antoine**
**17, Hameaux de Pont Tourgon Pleumeur-Bodou**
**F-22560 Treubeurden (FR)**

(72) Inventeur : **Milon, Jean**
**Kerlessanouet**
**F-22700 Perros-Guirec (FR)**
Inventeur : **Papin, Antoine**
**17, Hameaux de Pont Tourgon Pleumeur-Bodou**
**F-22560 Treubeurden (FR)**

(74) Mandataire : **Mongrédien, André et al**
**c/o SOCIETE DE PROTECTION DES INVENTIONS 25, rue de Ponthieu**
**F-75008 Paris (FR)**

EP 0 174 237 B1

## Description

La présente invention a pour objet un procédé et un dispositif d'acquisition rapide du rythme et de la phase d'un signal numérique au moyen d'une boucle à verrouillage de phase comprenant un oscillateur à quartz commandé en tension. Ce dispositif réalise cette acquisition même en présence de longues suites de zéros dans l'information de phase issue du signal numérique.

Les solutions connues au problème de la récupération du rythme et de la phase en transmission numérique varient selon les types de transmission et les codes utilisés. Dans le cas où le signal numérique reçu possède peu de raies d'énergie à la fréquence rythme, et c'est le cas des codes de type binaire ou bipolaire par exemple, on utilise des oscillateurs à quartz synchronisés sur le signal reçu au moyen d'une boucle à verrouillage de phase. L'asservissement peut être soit de type numérique et procéder par saut de phase, soit de type analogique et procéder par asservissement à une tension.

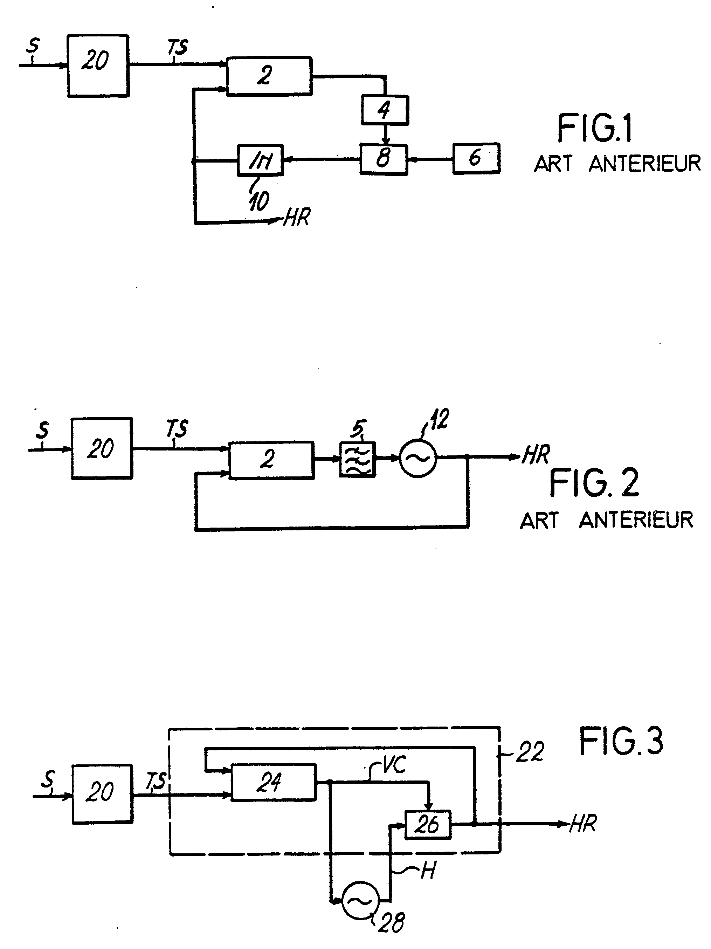

Les dessins des figures 1 et 2 illustrent schématiquement chacune de ces méthodes connues de synchronisation.

Le circuit de la figure 1 comprend une horloge rapide 6 de fréquence stable proche d'un multiple du débit du signal reçu, un moyen de saut de phase 8 ajoutant ou retranchant des impulsions à l'horloge 6, un diviseur 10 délivrant un signal d'horloge HR au rythme du signal reçu, un dispositif 20 d'extraction des informations de phase TS contenues dans le signal S, un comparateur de phase 2 recevant le signal TS et le signal d'horloge HR et délivrant une information d'avance ou de retard du signal TS par rapport au signal HR, et un filtre numérique 4 constitué le plus souvent par un compteur-décompteur dont la sortie commande le moyen de saut de phase 8.

Les variations de phase du signal HR délivré par le diviseur 10 sont obtenues par l'ajout ou le retrait d'impulsions du signal d'horloge rapide par le moyen 8. On peut donc obtenir des variations de phase du signal HR d'autant plus fines que le signal d'horloge délivré par le générateur 6 a une fréquence élevée. Cette nécessité d'une fréquence élevée est pénalisante car elle induit une forte consommation d'énergie.

De plus, quelle que soit la fréquence du signal d'horloge délivré par le générateur 6, la phase du signal HR est quantifiée. La phase de ce signal ne peut donc pas toujours être égale à la phase moyenne du signal TS. Ceci se traduit par un scintillement de la phase du signal HR, c'est-à-dire une oscillation de cette phase autour de la phase moyenne du signal numérique TS. Ce scintillement est accentué dans le cas d'une absence de transition dans le signal TS (par exemple dans le cas d'une longue suite de « O » dans le signal TS), ce qui peut être incompatible avec certaines techniques comme l'annulation d'écho.

Sur la figure 2, on a représenté un autre dispositif selon l'art connu. Ce dispositif comprend un détecteur d'information de phase 20. du signal reçu S, un comparateur de phase 2 recevant sur une entrée le signal TS délivré par le détecteur 20 et sur l'autre entrée le signal d'horloge HR délivré par un oscillateur à quartz commandé en tension 12. Le comparateur de phase 2 délivre un signal de tension représentatif de l'écart de phase entre les signaux TS et HR. Cette tension est appliquée après filtrage par un filtre 5 sur l'entrée de l'oscillateur 12.

Les dispositifs utilisant un oscillateur commandé en tension tel que celui-ci n'ont pas les inconvénients de forte consommation d'énergie ou de scintillement des dispositifs à saut de phase. En revanche, leur temps de mise en place est relativement long à cause du faible écart de fréquence par rapport à sa fréquence nominale que peut admettre le quartz de l'oscillateur, aggravé par les écarts de fréquence dus aux tolérances de fabrication et aux variations de température, ce qui est incompatible avec certaines utilisations telles que l'activation des circuits à la demande.

Par exemple, pour un signal numérique de fréquence 160 Kbit/s, la mise en phase de l'oscillateur commandé en tension peut atteindre plusieurs centaines de millisecondes.

Le but de l'invention est d'augmenter la vitesse d'acquisition du rythme et de la phase par rapport aux dispositifs connus tout en· conservant la stabilité procurée par l'oscillateur à quartz commandé en tension.

Ce but est atteint par l'utilisation d'une fonction de conversion tension-retard en aval de l'oscillateur à quartz commandée par le signal d'asservissement de l'oscillateur. Cette fonction permet de modifier la phase du signal d'horloge HR très rapidement en masquant la lenteur de changement de phase de l'oscillateur à quartz.

On pourra se reporter également à l'état de la technique constitué par la demande de brevet EP-A-0 054 322 et au brevet US-A-4 229 824.

Le procédé de l'invention permet de récupérer le rythme et la phase d'un signal numérique avec une stabilité au moins égale à celle obtenue avec un oscillateur commandé en tension seul mais avec un temps d'acquisition au moins dix fois plus rapide.

De manière plus précise, l'invention a pour objet un dispositif d'acquisition rapide du rythme et de la phase d'un signal numérique S dans lequel on produit, dans une boucle à verrouillage de phase comprenant un oscillateur à quartz commandé en tension, un signal de commande représentatif de la différence de phase entre ledit signal numérique S et un signal d'horloge HR délivré par ladite boucle et dans lequel ledit signal d'horloge HR est obtenu par décalage de la phase d'un signal horloge délivré par l'oscillateur à quartz, en fonction du niveau de tension dudit signal de commande.

L'invention a plus particulièrement pour objet un dispositif d'acquisition rapide du rythme et de la phase d'un signal numérique S comprenant un détecteur de transition délivrant un signal de transition TS, un oscillateur à quartz commandé en tension délivrant un signal d'horloge H et un moyen de traitement pour produire un signal d'horloge HR de même rythme que le signal de transition TS et dont la phase est fixe par rapport à la phase moyenne du signal de transition TS, dans lequel le moyen de traitement comprend un moyen de comparaison et un convertisseur tension-retard, ledit moyen de comparaison recevant sur deux entrées le signal de transition TS et le signal d'horloge HR et délivrant un signal VC dont le signe et le niveau sont fonctions de la différence de phase $\varphi$ entre lesdits signaux appliqués en entrée diminuée d'une phase fixe $\varphi_0$, ledit signal VC étant appliqué sur l'entrée de commande de l'oscillateur à quartz, ledit convertisseur tension-retard recevant ledit signal VC et délivrant le signal HR, dont les fronts montants sont décalés de ceux du signal d'horloge H en fonction du signe et du niveau du signal VC.

Selon un mode de réalisation préféré du dispositif de l'invention, le moyen de comparaison comprend un comparateur de phase et un intégrateur différentiel parfait, le comparateur de phase délivrant un premier signal d'impulsions $V_\varphi$ dont la largeur des impulsions est liée à la différence de phase $\varphi$ entre les signaux HR et S et un second signal d'impulsions $V_{\varphi_0}$ dont la largeur des impulsions est liée à une phase $\varphi_0$ fixe ajustable.

Selon une caractéristique du dispositif de l'invention, le convertisseur tension-retard comprend un comparateur recevant sur une entrée le signal VC délivré par l'intégrateur différentiel et sur une autre entrée un signal en dents de scie à la fréquence du signal d'horloge H, le signal de la sortie dudit comparateur étant le signal d'horloge HR.

Selon une autre caractéristique du dispositif de l'invention, le convertisseur tension-retard comprend en parallèle un condensateur et une source de courant continu, la charge du condensateur étant activée par une bascule monostable recevant un signal lié au signal d'horloge H.

Selon une autre caractéristique du dispositif de l'invention, le convertisseur tension-retard comprend en outre un moyen pour décaler le signal d'horloge HR d'une demi-période.

Selon une autre caractéristique du dispositif de l'invention, ledit moyen comprend une bascule monostable, une bascule bistable dont l'entrée d'horloge est reliée à la sortie inverse de la bascule monostable, une porte OU-EXCLUSIF dont une entrée reçoit le signal d'horloge H, et l'autre entrée le signal délivré par la bascule bistable et dont le signal de sortie commande le signal en dents de scie, et un moyen de remise à zéro du signal de commande VC.

Les caractéristiques et avantages de l'invention ressortiront mieux de la description qui va suivre donnée à titre illustratif mais non limitatif, en référence aux dessins annexés, sur lesquels :

— les figures 1 et 2, déjà décrites, représentent schématiquement des dispositifs d'acquisition du rythme et de la phase d'un signal numérique selon l'art connu,

— la figure 3 représente un mode de réalisation du dispositif de l'invention,

— la figure 4 illustre un mode de réalisation du moyen de traitement du dispositif de l'invention, et

— les figures 5a et 5b sont des chronogrammes illustrant le fonctionnement du moyen de traitement de la figure précédente.

On a représenté sur la figure 3 un dessin schématique d'un mode de réalisation du dispositif selon l'invention. Ce dispositif reçoit un signal numérique S et délivre un signal HR contenant le rythme et la phase de ce signal numérique. Le dispositif comprend un détecteur de transition 20, un moyen de traitement 22 et un oscillateur à quartz commandé en tension 28.

Le détecteur de transition 20 délivre un signal numérique TS présentant un front montant pour chaque transition du signal S. Ce signal TS est appliqué sur une entrée d'un moyen de comparaison 24, élément du moyen de traitement 22. Le signal HR délivré par le moyen de traitement 22 est appliqué sur l'autre entrée de ce moyen de comparaison 24. Ce dernier délivre un signal de tension dont le signe et le niveau varient en fonction de la différence de phase entre les signaux appliqués sur ses entrées.

Ce signal de tension est appliqué d'une part sur l'entrée de l'oscillateur à quartz commandé en tension 28 pour asservir la fréquence du signal délivré par cet oscillateur et d'autre part, sur l'entrée de commande d'un convertisseur tension-retard 26, autre élément au moyen de traitement 22. Ce convertisseur tension-retard reçoit en entrée le signal délivré par l'oscillateur à quartz commandé en tension 28 et délivre les fronts montants de ce signal avec un décalage fonction du signal de tension reçu sur son entrée de commande ; ce signal décalé constitue le signal HR contenant le rythme et la phase du signal numérique S.

L'utilisation du convertisseur tension-retard 26 pour décaler le signal délivré par l'oscillateur à quartz commandé en tension permet de réaliser ce décalage très rapidement. Ceci permet de pallier la relative lenteur au changement de phase de l'oscillateur à quartz. Ce convertisseur tension-retard permet de récupérer le rythme et la phase d'un signal numérique de 160 Kbit/s en moins de 5 ms alors que les dispositifs connus, décrits en référence aux figures 1 et 2, peuvent demander plus de 200 ms.

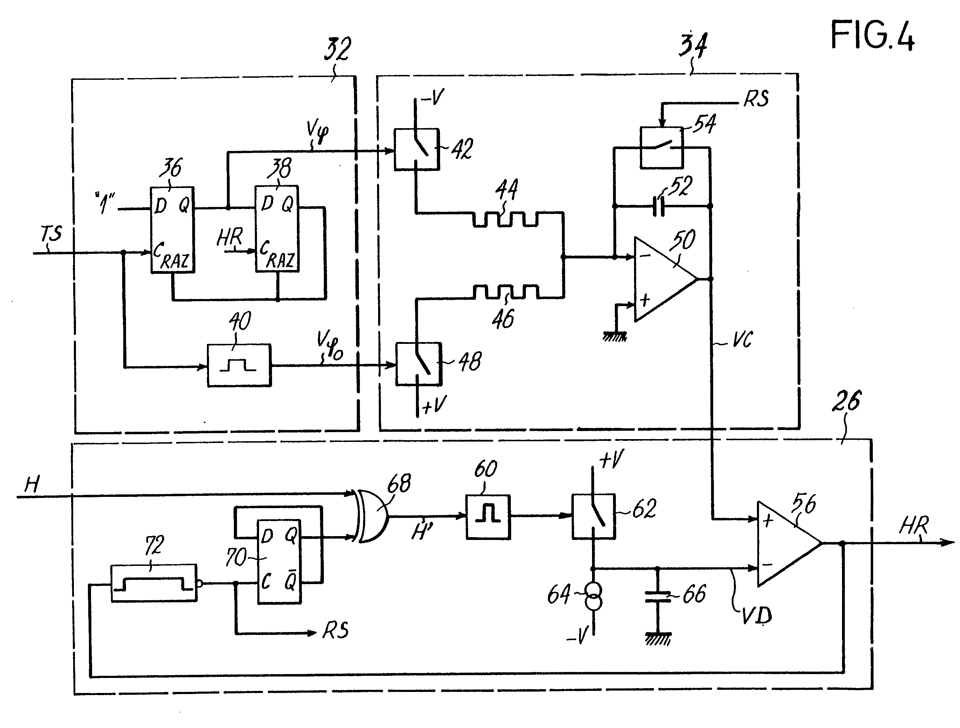

On va maintenant décrire un mode de réalisation du moyen de traitement 22 du dispositif selon l'invention en référence à la figure 4. On peut distinguer dans ce moyen de traitement trois parties principales. Un comparateur de phase 32 et un intégrateur différentiel parfait 34, qui ensemble constituent le moyen de comparaison 24, et le convertisseur tension-retard 26.

Le comparateur de phase 32 reçoit en entrée le signal numérique TS et le signal d'horloge HR et produit un premier signal de tension pulsé $V_\varphi$ dont la largeur des impulsions est représentative de la différence de phase $\varphi$ entre ces signaux et un second signal de tension pulsé $V_{\varphi_0}$ dont la largeur des impulsions est représentative d'une phase $\varphi_0$ fixe ajustable.

$\varphi_0$ représente le retard des fronts montants du signal d'horloge HR produit par le moyen de traitement par rapport à la moyenne des dates d'apparition des fronts montants du signal numérique TS lorsque l'acquisition est réalisée. Le signal d'horloge HR étant utilisé pour lire le signal reçu TS, on cherche en général, pour des raisons de simplicité d'utilisation, à ce que les fronts montants du signal d'horloge HR soient décalés par rapport à la moyenne des fronts montants du signal de transition TS. Un retard de $\pi$ par exemple permet une détection plus facile. Le retard obtenu avec le moyen de traitement de la figure 4 est égal à $\varphi_0$ ; sa valeur est ajustable.

L'intégrateur différentiel 34 reçoit en entrée les signaux d'impulsions $V_\varphi$ et $V_{\varphi_0}$ délivrés par le comparateur de phase 32 et délivre un signal de commande VC. Ce signal est comparé dans le convertisseur tension-retard 26 à un signal en dents de scie produit par la charge et la décharge d'un condensateur, la charge étant commandée par les fronts montants du signal d'horloge H délivré par l'oscillateur à quartz commandé en tension.

Le comparateur de phase 32 comprend en entrée deux bascules de type D 36 et 38 qui reçoivent respectivement sur leur entrée d'horloge le signal de transition TS et le signal d'horloge HR. L'entrée D de la bascule 36 est maintenue au niveau logique haut. Sa sortie non-inverseuse Q est reliée à l'entrée D de la bascule 38. La sortie non-inverseuse de cette dernière est reliée aux entrées RAZ de remise à zéro de chacune des bascules 36 et 38.

Par ce montage, on obtient sur la sortie non-inverseuse Q de la bascule 36 un signal numérique $V_\varphi$ qui passe au niveau haut sur le front montant du signal de transition TS et qui retombe sur le front montant du signal d'horloge HR. Le comparateur de phase 32 comprend également une bascule monostable 40 qui est commandée par les fronts montants du signal de transition TS et qui délivre un signal $V_{\varphi_0}$ dont la longueur des impulsions peut être ajustée.

L'intégrateur différentiel 34 comprend un interrupteur 42, deux résistances identiques 44 et 46 et un interrupteur 48, ces éléments étant disposés en série dans cet ordre. L'interrupteur 42 est relié à une tension fixe $-V$ et l'interrupteur 48 à la tension opposée $+V$. L'ouverture et la fermeture de ces interrupteurs sont respectivement commandées par les signaux de tension $V_\varphi$ et $V_{\varphi_0}$ délivrés par le comparateur de phase 32. On obtient ainsi au point commun des résistances 44 et 46 une impulsion de courant dont le signe et la largeur sont fonction de la différence de phase $\varphi - \varphi_0$.

Cette impulsion de courant est reçue sur l'entrée inverseuse d'un amplificateur différentiel 50. L'entrée non-inverseuse de cet amplificateur est reliée à la masse. Un condensateur 52 est monté en contre-réaction sur cet amplificateur qui fonctionne ainsi en intégrateur parfait. On a également prévu un interrupteur 54 pour décharger le condensateur 52. Cet interrupteur 54 est commandé par un signal issu du convertisseur tension-retard 26. Ce signal est maintenu au niveau bas en temps normal. L'interrupteur 54 est donc ouvert.

Le signal de tension VC délivré par l'intégrateur différentiel 34 constitue le signal de commande du convertisseur de tension-retard 26. Ce signal est appliqué sur l'entrée non-inverseuse d'un amplificateur différentiel 56. Sur l'entrée inverseuse de cet amplificateur, on applique un signal en dents de scie commandé par les fronts montants d'un signal d'horloge H', qui est égal soit au signal d'horloge H soit à son opposé $\overline{H}$.

Ce signal est produit de la manière suivante : les fronts montants du signal d'horloge H' attaquent une bascule monostable 60 qui délivre alors une courte impulsion venant fermer pendant un bref instant un interrupteur 62 dont une entrée est reliée à une tension fixe $+V$ et dont l'autre entrée est reliée à l'entrée inverseuse de l'amplificateur 56. Sur cette entrée inverseuse, on dispose en outre un générateur de courant 64 relié à un potentiel fixe $-V$ et à un condensateur 66.

Le condensateur 66 se charge pendant le bref instant où l'interrupteur 62 est fermé et se décharge ensuite lorsque l'interrupteur est ouvert. L'amplificateur 56 reçoit donc sur son entrée inverseuse un signal de tension en dents de scie de même fréquence que le signal H.

On obtient donc en sortie du comparateur 56 un signal d'horloge HR dont les fronts montants correspondent aux fronts montants du signal d'horloge H retardés d'une valeur dépendant de la tension de commande VC.

On note que le retard obtenu par ce convertisseur est limité à un peu moins d'une période du signal d'horloge H, ceci à cause du temps de charge du condensateur 66. Mais, la phase du signal de transition TS par rapport à la phase du signal d'horloge H est quelconque. Il est donc nécessaire que le convertisseur tension-retard puisse retarder le signal d'horloge H d'une période complète de ce signal. Pour cela, un retard complémentaire d'une demi-période est obtenu par inversion du signal d'horloge H à l'aide d'une porte OU-EXCLUSIF 68 commandée par une bascule bistable 70. La porte 68 fournit donc un signal H' qui représente H ou $\overline{H}$.

Plus précisément, on applique le signal d'horloge HR produit par le comparateur 56 sur l'entrée d'une bascule monostable réamorçable 72 délivrant une impulsion de largeur légèrement supérieure à la période du signal d'horloge H et on utilise le signal délivré par la sortie inverseuse de cette bascule monostable. Ce signal sert d'une part à commander la fermeture de l'interrupteur 54 permettant la décharge du condensateur 52 de l'intégrateur 34, et d'autre part est appliqué sur l'entrée d'horloge C de la bascule 70 montée en bistable par rebouclage de la sortie inverseuse $\overline{Q}$ sur l'entrée D. La sortie non-inverseuse Q de cette bascule est reliée à une entrée de la porte OU-EXCLUSIF 68 dont l'autre entrée reçoit le signal d'horloge H. La sortie de la porte OU-EXCLUSIF est reliée à l'entrée de la bascule monostable 60.

L'utilisation de ce complément de retard est obtenue de la façon suivante. L'amplitude de la tension en dents de scie appliquée sur l'entrée inverseuse du comparateur 56 est prévue inférieure à l'amplitude maximale du signal de commande VC. Cette amplitude correspond au cas où le signal de transition TS est pratiquement en retard de $2\pi$ par rapport au signal d'horloge H. Si la demande de retard représentée par le niveau du signal de commande VC est plus importante que ne peut le fournir le convertisseur 26, le comparateur 56 ne bascule pas. Alors, le bascule monostable 72 dont la constante de temps est légèrement supérieure à la période du signal d'horloge H retombe. Ce changement d'état actionne la bascule 70. La porte OU-EXCLUSIF 68 reçoit donc sur son entrée reliée à la bascule 70 un signal qui change d'état, ce qui provoque un décalage de $\pi$ du signal d'horloge H'. Par ailleurs, le changement d'état de la sortie de la bascule monostable 72 ferme l'interrupteur 54, ce qui décharge le condensateur 52. Le signal de commande VC est ainsi remis à zéro.

Les deux actions commandées par le changement d'état de la sortie de la bascule monostable 72 sont complémentaires. Ceci minimise le saut de phase instantané du signal d'horloge HR qui n'a d'ailleurs lieu qu'à la mise en route ou lors d'une perte de synchronisme.

A la mise en route, le signal d'horloge H a un rythme sensiblement égal au rythme du signal de transition TS. Le convertisseur tension-retard fournit donc rapidement le signal d'horloge HR à partir du signal H, ceci en un temps très inférieur à la durée de glissement d'une période du signal d'horloge H par rapport au rythme du signal de transition TS. Le signal de tension VC agit alors sur l'oscillateur à quartz de telle sorte que la fréquence délivrée par cet oscillateur converge vers la fréquence moyenne du signal de transition TS.

On peut noter que, pendant les lacunes du signal de transition TS, c'est-à-dire pendant des périodes pour lesquelles aucune transition n'est présente, la fréquence délivrée par l'oscillateur commandé en tension est maintenue constante par le signal de tension VC grâce à la faible dérive de l'intégrateur 34. On a constaté, de manière expérimentale, que le système reste stable même si le signal de transition TS présente une absence de transition pendant des durées supérieures à la seconde (pour un signal numérique S ayant un débit de 160 Kbit/s).

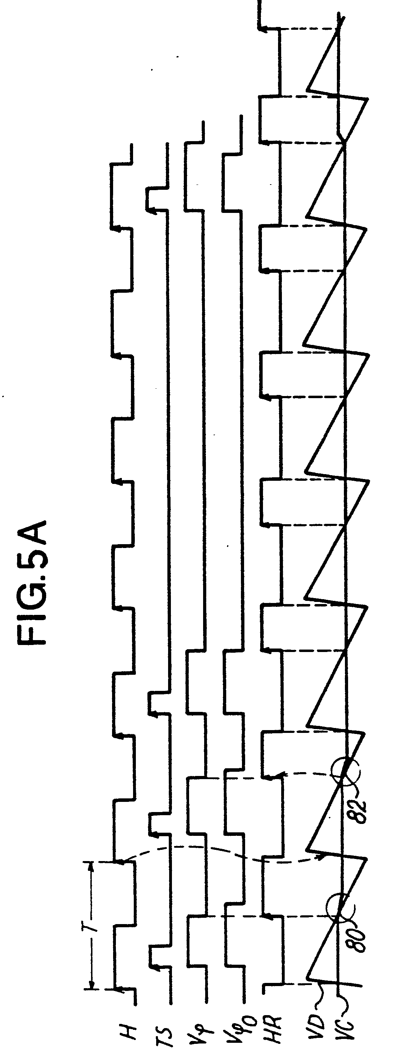

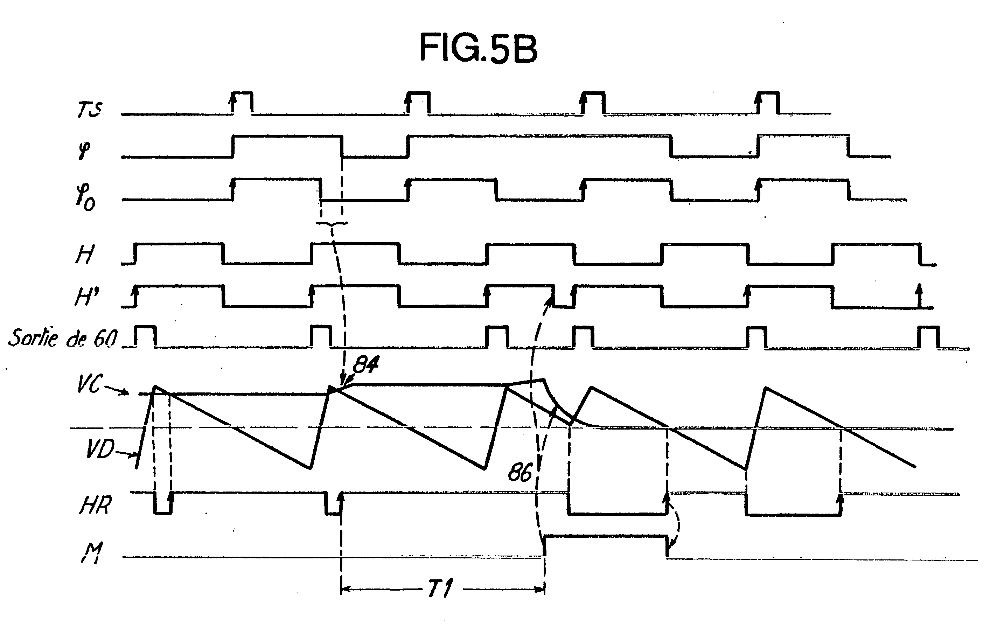

On a représenté sur les figures 5a et 5b des chronogrammes illustrant l'état des signaux produits par le circuit de la figure 4. La figure 5a correspond au cas général de fonctionnement, la figure 5b correspond au cas particulier où le convertisseur tension-retard ne peut fournir le retard demandé par exemple quand le retard du signal HR sur le signal H doit être très faible ou proche d'une période entière. Le signal HR ne présente plus alors de front montant et la sortie de la bascule monostable 72 change d'état.

Sur la figure 5a, on a représenté successivement le signal d'horloge H, de période T, le signal de transition TS, le signal $V_\varphi$ indiquant la différence de phase entre le signal de transition TS et le signal d'horloge HR, le signal $V_{\varphi_0}$ indiquant une phase de référence, le signal d'horloge HR et les signaux VD et VC appliqués respectivement sur les entrées inverseuse et non-inverseuse du comparateur 56 (figure 4).

Sur ce chronogramme, on note que les fronts montants du signal TS mettent les signaux $V_\varphi$ et $V_{\varphi_0}$ au niveau haut. Le signal $V_{\varphi_0}$ retombe après une durée fixe ajustable ; sur la figure, cette durée est égale à T/2. Le signal $V_\varphi$ retombe sur le front montant du signal d'horloge HR. L'état de ce dernier est égal au signe de la différence VC — VD.

Sur les deux premières transitions du signal TS, le signal d'horloge HR a un retard inférieur à T/2 ; les impulsions de $V_\varphi$ sont donc inférieures à celles de $V_{\varphi_0}$, ce qui se traduit par les variations 80 et 82 du signal VC. Ceci retarde le signal d'horloge HR jusqu'à ce qu'il soit décalé de T/2 par rapport au signal de transition TS.

On note par ailleurs que l'absence de transition dans le signal TS n'a pas d'influence néfaste sur le signal d'horloge HR, ceci étant dû à l'absence de dérive de l'intégrateur 34 qui délivre un signal VC de niveau constant.

A l'extrémité droite du chronogramme, on a représenté le cas symétrique du précédent où $\varphi$ est supérieur à $\varphi_0$. Le niveau du signal VC augmente ce qui avance les fronts montants du signal d'horloge HR.

Sur la figure 5b on a représenté les mêmes signaux que sur la figure 5a. On y a ajouté le signal M de sortie de la bascule monostable 72.

L'état des différents signaux est tel que le signal VC devient supérieur à la valeur crête du signal VD. Alors le signal d'horloge HR ne bascule plus et au bout d'une durée T1, légèrement supérieure à T, le signal M passe au niveau haut. Ceci remet à zéro le signal VC et change l'état de la bascule 70, ce qui a pour effet d'inverser la phase du signal d'horloge H' commandant le signal en dent de scie qui se trouve de ce fait avancé d'une demi-période du signal d'horloge H. Le signal M retombe sur le premier front montant suivant du signal d'horloge HR.

Le signal d'horloge HR évolue ensuite comme sur la figure 5a de manière à être décalé de T/2 avec le signal de transition TS.

On peut noter sur ce chronogramme que :

La différence $\varphi - \varphi_0$ provoque en 84 une remontée de niveau du signal VC, (cette remontée a été très exagérée sur le dessin),

La phase du signal de transition TS par rapport aux fronts montants du signal H est telle que le retard demandé est trop faible pour être engendré à partir du signal VD en dents de scie, ce qui provoque en 86 une lacune du signal HR. Le signal M ·issu du monostable 72 provoque alors une inversion du signal H' et une remise à zéro du signal VC. La phase du signal HR se trouve alors très proche de la phase demandée.

**Revendications**

1. Dispositif d'acquisition rapide du rythme et de la phase d'un signal numérique S comprenant un détecteur de transition (20) délivrant un signal de transition TS, un oscillateur à quartz commandé en tension (28) engendrant un signal d'horloge H et un moyen de traitement (22) pour produire un signal d'horloge HR de même rythme que le signal de transition TS et dont la phase est fixe par rapport à la phase moyenne du signal de transition TS, ledit dispositif étant caractérisé en ce que le moyen de traitement (22) comprend un moyen de comparaison (24) et un convertisseur de tension-retard (26), ledit moyen de comparaison recevant sur deux entrées le signal de transition TS et le signal d'horloge HR et délivrant un signal VC dont le signe et le niveau évoluent en fonction de la différence de phase φ entre lesdits signaux appliqués en entrée diminuée d'une phase fixe $\varphi_0$, ledit signal VC étant appliqué sur l'entrée de commande de l'oscillateur à quartz, ledit convertisseur tension-retard recevant le signal VC et délivrant le signal HR, dont les fronts montants sont décalés de ceux du signal d'horloge H en fonction du signe et du niveau du signal VC.

2. Dispositif selon la revendication 1, caractérisé en ce que le moyen de comparaison (24) comprend un comparateur de phase (32) et un intégrateur différentiel parfait (34), le comparateur de phase délivrant un premier signal d'impulsions $V_\varphi$ dont la largeur des impulsions est liée à la différence de phase φ entre les signaux HR et S et un second signal d'impulsions $V_{\varphi_0}$ dont la largeur des impulsions est liée à une phase $\varphi_0$ fixe ajustable.

3. Dispositif selon l'une quelconque des revendications 1 et 2, caractérisé en ce que le convertisseur tension-retard (26) comprend un comparateur (56) recevant sur une entrée le signal VC délivré par l'intégrateur (54) et sur une autre entrée un signal en dents de scie à la fréquence du signal d'horloge H, le signal de sortie dudit comparateur étant le signal d'horloge HR.

4. Dispositif selon la revendication 3, caractérisé en ce que le convertisseur tension-retard (26) comprend en parallèle un condensateur (66) et une source de courant continu (64), la charge du condensateur étant activée par une bascule monostable (60) recevant un signal lié au signal d'horloge H.

5. Dispositif selon l'une quelconque des revendications 3 et 4, caractérisé en ce que le convertisseur tension-retard (26) comprend en outre un moyen pour décaler le signal d'horloge H d'une demi-période.

6. Dispositif selon la revendication 5, caractérisé en ce que ledit moyen comprend une bascule monostable (72), une bascule bistable (70) dont l'entrée d'horloge est reliée à la sortie inverse de la bascule monostable (72), une porte OU-EXCLUSIF (68) dont une entrée reçoit le signal d'horloge H, et l'autre entrée le signal délivré par la bascule bistable (70) et dont le signal de sortie commande le signal en dents de scie, et un moyen (54) de remise à zéro du signal de commande VC.

**Claims**

1. Device for the fast acquisition of the rate and the phase of a digital signal S comprising a transition detector (20) supplying a transition signal TS, a voltage controlled quartz crystal oscillator (28) generating a clock signal H and a processing means (22) for producing a clock signal HR having the same rate as the transition signal TS whose phase is fixed with respect to the mean phase of the transition signal TS, the said device being characterized in that the processing means (22) comprises a means of comparison (24) and a voltage-delay converter (26), the said means of comparison receiving on two inputs the transition signal TS and the clock signal HR and supplying a signal VC whose sign and level vary as a function of the phase difference φ between the said signals applied as inputs reduced by a fixed phase $\varphi_0$, the said signal VC being applied to the control input of the quartz crystal oscillator, the said voltage-delay converter receiving the signal VC and supplying the signal HR, whose rising edges are shifted from those of the clock signal H as a function of the sign and of the level of the signal VC.

2. Device according to Claim 1, characterized in that the means of comparison (24) comprises a phase comparator (32) and a perfect differential integrator (34), the phase comparator supplying a first signal formed of pulses $V_\varphi$ of which the width of the pulses is related to the phase difference φ between the signals HR and S and a second signal formed of pulses $V_{\varphi_0}$ of which the width of the pulses is related to an adjustable fixed phase $\varphi_0$.

3. Device according to either of Claims 1 or 2, characterized in that the voltage-delay converter (26) comprises a comparator (56) receiving on one input the signal VC supplied by the integrator (54) and on another input a sawtooth signal at the frequency of the clock signal H, the output signal of the said comparator being the clock signal HR.

4. Device according to Claim 3, characterized in that the voltage-delay converter (26) comprises, in parallel, a capacitor (66) and a D.C. current source (64), the charging of the capacitor being actuated by a monostable flip-flop (60) receiving a signal related to the clock signal H.

5. Device according to either of Claims 3 or 4, characterized in that the voltage-delay converter (26) furthermore comprises a means for shifting the clock signal H by a half-period.

6. Device according to Claim 5, characterized in that the said means comprises a monostable flip-flop (72), a bistable flip-flop (70) whose clock input is connected to the inverse output of the monostable flip-flop (72), an EXCLUSIVE-OR gate (68) of which one input receives the clock signal H and the other input receives the signal supplied by the bistable flip-flop (70) and whose output signal controls the sawtooth signal, and a means (54) of resetting the control signal VC to zero.

## Patentansprüche

1. Vorrichtung zum schnellen Erlangen des Taktes und der Phase eines digitalen Signales S mit einem Übergänge abfühlenden Detektor (20), der ein Übergangssignal TS ausgibt, mit einem spannungsgetriebenen Quarzoszillator (28), der ein Zeitsignal H erzeugt, und mit einem Bearbeitungs-Hilfsmittel (22) zum Erzeugen eines Zeitsignals HR gleichen Taktes wie das Übergangssignal TS, und dessen Phase mit Rücksicht auf die mittlere Phase des Übergangssignals TS festgesetzt ist, dadurch gekennzeichnet, daß das Bearbeitungs-Hilfsmittel (22) ein Vergleichshilfsmittel (24) und einen verzögernden Spannungsumformer (26) enthält, und daß das besagte Vergleichshilfsmittel über zwei Eingänge das Übergangssignal TS und das Zeitsignal HR empfängt und ein Signal VC ausgibt, dessen Vorzeichen und Größe als Funktion der Differenz der Phase $\varphi$ zwischen den besagten, am Eingang angelegten Signale schwanken, die um eine feste Phase $\varphi_0$ vermindert ist, wobei das besagte Signal VC an dem Antriebseingang des Quarzoszillators angelegt ist und der besagte verzögernde Spannungsumformer das Signal VC empfängt und das Signal HR ausgibt, dessen aufsteigende Vorderflanken als Funktion des Vorzeichens und der Größe des Signales VC zu denjenigen des Zeitsignals H verschoben sind.

2. Vorrichtung gemäß dem Anspruch 1, dadurch gekennzeichnet, daß das Vergleichshilfsmittel (24) einen Phasenkomparator (32) und einen ergänzten Differentialintegrator (34) enthält und der Phasenkomparator ein erstes Impulssignal $V_\varphi$, bei dem die Impulsbreite an die Differenz der Phase $\varphi$ zwischen den Signalen HR und S gebunden ist, und ein zweites Impulssignal $V_{\varphi_0}$ ausgibt, bei dem die Impulsbreite an eine feste, einstellbare Phase $\varphi_0$ gebunden ist.

3. Vorrichtung gemäß einem der Ansprüche 1 und 2, dadurch gekennzeichnet, daß der verzögernde Spannungsumformer (26) einen Komparator (56) enthält, der an seinem einen Eingang das von dem Integrator (54) abgegebene Signal und an seinem anderen Eingang ein Sägezahnsignal mit der Frequenz des Zeitsignals H empfängt, während das Ausgangssignal des besagten Komparators das Zeitsignal HR ist.

4. Vorrichtung gemäß dem Anspruch 3, dadurch gekennzeichnet, daß der verzögernde Spannungsumformer (26) in parallelen Zweigen einen Kondensator (66) und eine Gleichstromquelle (64) enthält und die Aufladung des Kondensators durch eine monostabile Kippschaltung (60) erfolgt, die ein Signal empfängt, das an das Zeitsignal H gebunden ist.

5. Vorrichtung gemäß einem der Ansprüche 3 und 4, dadurch gekennzeichnet, daß der verzögernde Spannungsumformer (26) außerdem ein Hilsmittel zum Verschieben des Zeitsignals H um eine Halbe Periode enthält.

6. Vorrichtung gemäß dem Anspruch 5, dadurch gekennzeichnet, daß das besagte Hilfsmittel eine monostabile Kippschaltung (72), eine bistabile Kippschaltung (70), deren Zeitsignaleingang mit dem inversen Ausgang der monostabilen Kippschaltung (72) verbunden ist, ein EXCLUSIV-ODER-Glied (68), dessen einer Eingang das Zeitsignal H und dessen anderer Eingang das von der bistabilen Kippschaltung (70) ausgegebene Signal aufnehmen, und dessen Ausgangssignal das Sägezahnsignal steuert, und ein Hilfsmittel (54) zum Zurückstellen des Steuersignales VC auf Null enthält.

FIG.1
ART ANTERIEUR

FIG.2
ART ANTERIEUR

FIG.3

FIG.4

EP 0 174 237 B1

# FIG.5A

EP 0 174 237 B1

# FIG.5B

EP 0 174 237 B1